# EUROPÄISCHE PATENTSCHRIFT

(11) **EP 0 913 284 B1**
(45) Veröffentlichungstag und Bekanntmachung des Hinweises auf die Patenterteilung: **29.12.2004**
(21) Anmeldenummer: 98250382.3
(22) Anmeldetag: 29.10.1998
(51) Int. Cl.: B60J 1/17, E05F 11/48, B60J 5/04

(54) **Kraftfahrzeugtür**
Vehicle door
Porte de véhicule

(30) Priorität: 29.10.1997 DE 19747710
(43) Veröffentlichungstag der Anmeldung: 06.05.1999
(73) Patentinhaber: Brose Fahrzeugteile GmbH & Co. KG, Coburg, 96450 Coburg (DE)
(72) Erfinder: Feder, Roland, 96479 Weitramsdorf (DE); Burger, Stefan, 95519 Ernstfeld (DE); Neuss, Sabine, 71691 Freiberg/Neckar (DE); Pleiss, Eberhard, 96253 Untersiemau (DE)
(74) Vertreter: Baumgärtel, Gunnar, Dr.

(56) Entgegenhaltungen:
- EP-A- 0 385 197
- EP-A- 0 967 097
- DE-A- 19 526 367
- FR-A- 2 773 747
- US-A- 5 050 350
- US-A- 5 355 629

## Beschreibung

Die Erfindung betrifft eine Kraftfahrzeugtür nach dem Oberbegriff des Patentanspruchs 1.

Eine derartige Kraftfahrzeugtür ist beispielsweise aus der DE 44 28 262 C1 bekannt. Diese Fahrzeugtür umfaßt einen Seilfensterheber mit einer Führungsschiene, entlang der mittels eines geeigneten motorischen Antriebs ein Mitnehmer bewegt wird, der wiederum mit der zu verstellenden Fensterscheibe verbunden ist. Dadurch wird die Verstellkraft des Antriebsmotors über den auf der Führungsschiene gelagerten Mitnehmer auf die zu verstellende Fensterscheibe übertragen.

Der Erfindung liegt die Aufgabe zugrunde, eine Kraftfahrzeugtür der eingangs genannten Art zu verbessern, indem die Teilezahl und das Gewicht der Tür verringert werden, ohne die Stabilität bzw. Steifigkeit der Fahrzeugtür zu beeinträchtigen.

Diese Aufgabe wird erfindungsgemäß durch die Schaffung einer Kraftfahrzeugtür mit den Merkmalen des Patentanspruchs 1 gelöst.

Danach ist mindestens ein zusätzliches, nicht zum Verstellgetriebe des Fensterhebers gehörendes Funktionselement einerseits zwischen den Verbindungsstellen der Führungsschiene an der Türkarosserie mit der Führungsschiene und andererseits mit der Türkarosserie verbunden. Bei diesem Funktionselement kann es sich beispielsweise um einen Türzuziehgriff, einen Lautsprecher, einen Seitenairbag oder ein Türsteuergerät handeln, also insbesondere um Funktionselemente, die überhaupt nicht zu den Bestandteilen eines Kraftfahrzeugfensterhebers gehören.

Das genannte Funktionselement muß dabei nicht direkt mit der Führungsschiene und der Türkarosserie verbunden sein; vielmehr ist auch eine indirekte Verbindung über mindestens ein weiteres Bauteil denkbar. So kann beispielsweise das Funktionselement auf einem Trägerelement angeordnet sein, das einerseits an der Türkarosserie und andererseits an der Führungsschiene befestigt ist. Bei einem doppelsträngigen Fensterheber ist ferner denkbar, das Funktionselement mit den beiden Führungsschienen des doppelsträngigen Fensterhebers zu verbinden. Da die Führungsschienen wiederum mit der Türkarosserie verbunden sind, erfolgt auf diesem Wege auch eine indirekte Anbindung an die Karosserie.

In jedem Fall ist es im Hinblick auf die Stabilisierung der häufig mit einem großflächigen Ausschnitt versehenen Türkarosserie vorteilhaft, wenn das Funktionselement mit der Türkarosserie nicht nur über eine einzige Führungsschiene verbunden ist und sich zudem zumindest teilweise außerhalb der Führungsschiene über den großflächigen Ausschnitt in der Türkarosserie erstreckt.

Bei der erfindungsgemäßen Lösung wird die in einem Fensterheber üblicherweise ohnehin vorhandene und stabil ausgebildete Führungsschiene in vorteilhafter Weise genutzt, um zusätzliche Funktionselemente der Fahrzeugtür stabil zu lagern, ohne hierfür weitere Versteifungsbereiche in der Fahrzeugtür vorsehen zu müssen.

Gleichzeitig kann durch eine entsprechende Anordnung von an sich primär nicht der Versteifung der Fahrzeugtür dienenden sondern für weitere Aufgaben vorgesehenen Funktionselementen eine Stabilisierung der Türkarosserie erreicht werden.

Dabei weist das Funktionselement (bzw. dessen Trägerelement) vorzugsweise mindestens zwei voneinander beabstandete Befestigungsstellen zur Verbindung mit der Führungsschiene einerseits und mit der Türkarosserie andererseits auf.

Bei dem Funktionselement kann es sich z.B. um den Zuziehgriff einer Fahrzeugtür handeln, der üblicherweise an der Türinnenverkleidung ausgebildet wird. Hierzu muß die Türinnenverkleidung im Bereich des Zuziehgriffes entsprechend stabil gestaltet sein. Diese Maßnahme entfällt jedoch, wenn der Zuziehgriff gemäß der vorliegenden Erfindung einerseits an der Führungsschiene und andererseits an der Karosserie der Fahrzeugtür befestigt wird.

Ferner wird durch die Verbindung der Türkarosserie mit der Führungsschiene über den Zuziehgriff die Fahrzeugtür noch zusätzlich stabilisiert; denn der Zuziehgriff übernimmt hier zusätzlich die Funktion einer die Fahrzeugtür stabilisierenden Querstrebe.

Dies kann auch mit weiteren Funktionselementen der Kraftfahrzeugtür, wie z.B. einem Türsteuergerät oder einem auf einem entsprechenden Trägerelement angeordneten Lautsprecher, erreicht werden.

Bei einer weiteren bevorzugten Ausführungsform der Erfindung ist das Funktionselement als eine Airbageinheit ausgebildet, die einerseits an der Führungsschiene und andererseits an der Türkarosserie befestigt ist. Hierdurch wird eine hinreichende Stabilität in den Verbindungsbereichen zwischen Airbageinheit und Fahrzeugtür gewährleistet. Ferner übernimmt die Airbageinheit ähnlich dem oben beschriebenen Zuziehgriff noch eine Stabilitätsfunktion.

Selbstverständlich können auch mehrere der obengenannten Funktionskomponenten gleichzeitig in der genannten Weise im Bereich der Fahrzeugtür angeordnet werden. Hierdurch wird eine besonders deutliche Erhöhung der Stabilität der Fahrzeugtür erreicht.

Die an der Führungsschiene vorgesehenen Befestigungsstellen für die zusätzlichen Funktionselemente der Fahrzeugtür können dabei an einer Grundplatte der Führungsschiene ausgebildet sein, die in bekannter Weise zur Aufnahme des Fensterheberantriebs an der Führungsschiene angeformt ist.

Ferner kann die Führungsschiene an mindestens einem ihrer Endbereiche eine sich im wesentlichen entlang der Scheibenebene erstreckende Verbreiterung aufweisen, die über mindestens eine, vorzugsweise zwei Befestigungsstellen mit der Türkarosserie verbunden ist. Hierdurch wird eine besonders feste Verbindung zwischen Führungsschiene und Türkarosserie erreicht, was insbesondere dann vorteilhaft ist, wenn von der Führungsschiene, z.B. im Fall der Befestigung eines Seitenairbags, größere Kräfte aufgenommen werden sollen.

Nach einem weiteren Aspekt der Erfindung ist vorgesehen, daß zumindest ein Teil der Türinnenverkleidung mit der Führungsschiene verbunden ist. Hierdurch kann eine vormontierbare Einheit geschaffen werden, die aus der Führungsschiene und der Türinnenverkleidung besteht. Diese kann außerhalb des eigentlichen Montageplatzes der Fahrzeugtür vormontiert werden und dann als Einheit in die entsprechende Fahrzeugtür eingesetzt werden. Hierdurch wird die Montage einer Fahrzeugtür weiter vereinfacht und beschleunigt.

Dies gilt insbesondere dann, wenn das entsprechende Teil der Türinnenverkleidung ausschließlich an der Führungsschiene befestigt ist. In diesem Fall braucht lediglich die Führungsschiene in bekannter Weise an der Türkarosserie befestigt zu werden. Die mit der Führungsschiene verbundene Türinnenverkleidung ist dann automatisch ebenfalls an der Fahrzeugtür befestigt.

Weitere Vorteile der Erfindung ergeben sich aus der nachfolgenden Beschreibung von Ausführungsbeispielen anhand der Figuren.

Es zeigen:
- Figur 1 -: eine perspektivische Darstellung einer Fahrzeugtür mit einer Türinnenverkleidung und einer Führungsschiene eines Fensterhebers, an der ein Zuziehgriff befestigt ist;
- Figur 2 -: eine schematische Darstellung einer Türkarosserie mit einer Führungsschiene, an der ein Zuziehgriff und eine Türinnenverkleidung befestigt sind;
- Figur 3 -: eine schematische Darstellung einer Türkarosserie mit einer Führungsschiene, an der ein Zuziehgriff, ein Türsteuergerät und ein Lautsprecher befestigt sind;
- Figur 4 -: eine schematische Darstellung einer Türkarosserie mit einer Führungsschiene, an der ein Zuziehgriff und ein Seitenairbag befestigt sind;
- Figur 5 -: eine schematische Darstellung einer Türkarosserie mit zwei Führungsschienen, an denen ein Zuziehgriff, eine Airbageinheit und eine Türinnenverkleidung befestigt sind.

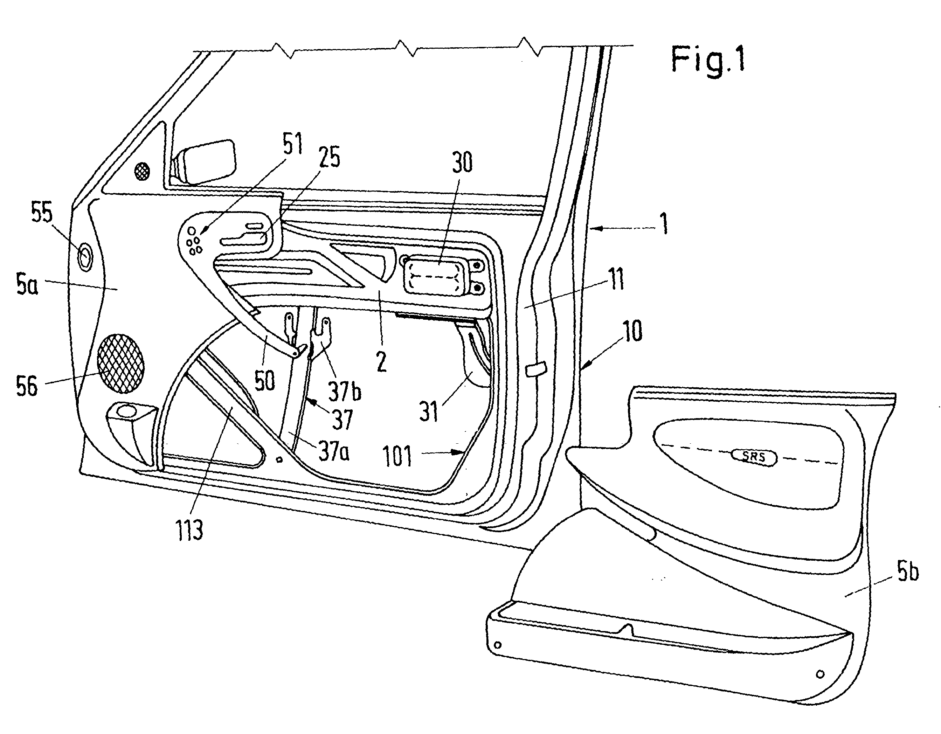

In Figur 1 ist perspektivisch eine Fahrzeugtür mit einer Türkarosserie 1 dargestellt, die ein Türaußenblech 10, ein Türinnenblech 11 sowie eine Trägerplatte 2 umfaßt, durch die ein großflächiger Ausschnitt 101 in dem Türinnenblech 11 abgedeckt wird.

Auf der dem Fahrzeuginnenraum (Trockenraum) zugewandten Seite der zur Türkarosserie 1 gehörenden Trägerplatte 2 sind verschiedene Funktionselemente der Fahrzeugtür, wie z.B. ein Seitenairbag 30 und ein mit einer Abdeckung 56 versehener Lautsprecher, angeordnet.

Anhand Figur 1 ist ferner erkennbar, daß sich auf der Naßraumseite des Türinnenblechs 11 eine Führungsschiene 37a eines Kraftfahrzeugfensterhebers 37 erstreckt, auf der ein Mitnehmer 37b gelagert ist, der mit der zu verstellenden Fensterscheibe verbunden wird. Da sich die Führungsschiene 37a nach Art einer Querstrebe über der großflächigen Ausnehmung 101 erstreckt, dient sie gleichzeitig zur Stabilisierung der Türkarosserie 1 im Bereich der Ausnehmung 101. Hierfür ist zusätzlich noch eine weitere Querstrebe 113 vorgesehen.

An der Führungsschiene 37a des Fensterhebers 37 ist ein Zuziehgriff 50 befestigt, der einstückig mit der Schale des Türinnenöffners 25 ausgebildet und im Bereich dieser Schale mit der Trägerplatte 2 verbunden ist. Auf dieser Schale ist außerdem ein Schalterblock 51 angeordnet, mit dem diverse Funktionskomponenten der Fahrzeugtür, wie z.B. der Fensterheber, bedient werden können.

Die Türkarosserie 1 wird zum Fahrzeuginnenraum hin durch eine zweiteilige Türinnenverkleidung 5a, 5b abgedeckt, deren eines Teil 5a unter anderem einen Lufteinlaß 55 und eine Lautsprecherabdeckung 56 aufweist, während an dem zweiten Teil 5b der Türinnenverkleidung eine Abdeckung für die Airbageinheit 30 und eine Armstütze angeformt sind.

Aufgrund der Verbindung des Zuziehgriffes 50 mit der Führungsschiene 37a einerseits und der Trägerplatte 2 andererseits ist eine stabile Befestigung des Zuziehgriffes 50 an der Türkarosserie 1 gewährleistet, ohne daß hierfür spezielle, zusätzliche Versteifungsbereiche vorgesehen werden müßten. Vielmehr werden die ohnehin stabil ausgebildete Führungsschiene 37a sowie die Trägerplatte 2 zur Befestigung des Zuziehgriffes 50 verwendet.

Hierdurch wird bei einer geringen Teilezahl die erforderliche Stabilität der Tür ohne weiteres gewährleistet. Es kommt noch hinzu, daß der Zuziehgriff 50 auch als Querstrebe wirkt, die von der Führungsschiene 37a über einen Teil des Ausschnitts 101 zu der Trägerplatte 2 verläuft und dadurch zur Stabilisierung der Türkarosserie 1 beiträgt.

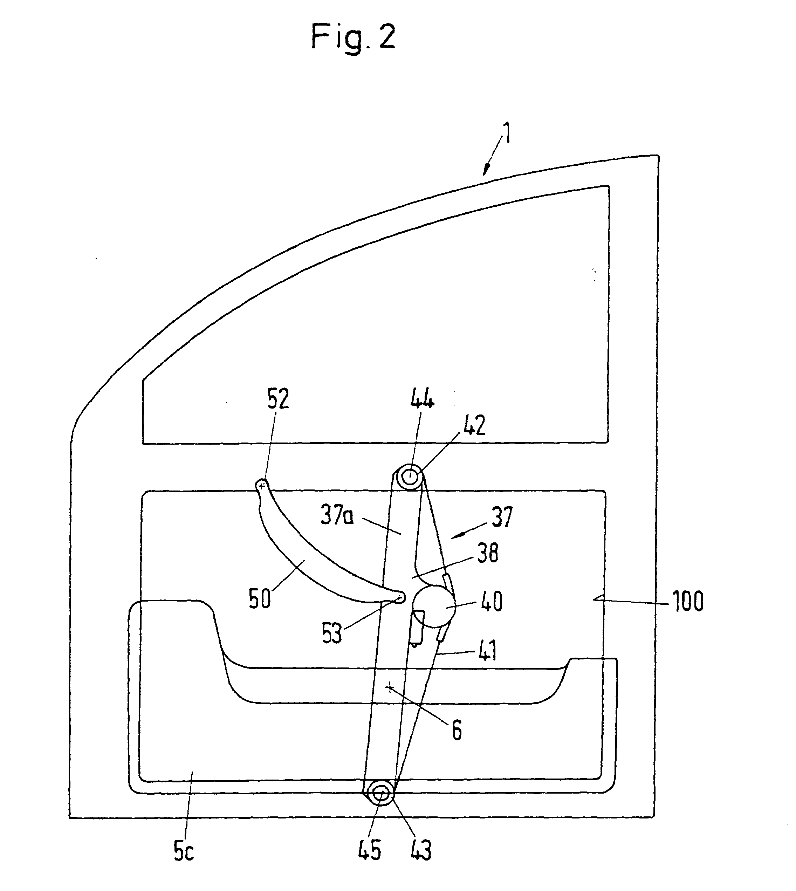

Die Figuren 2 bis 5 zeigen mehrere der Figur 1 vergleichbare Ansichten einer Türkarosserie vom Fahrzeuginnenraum (Trockenraum) her, wobei hier die Türkarosserie lediglich schematisch dargestellt ist. Ferner sind in den Figuren 2 bis 5 das Innenblech der Türkarosserie und die Türinnenverkleidung jeweils durchscheinend dargestellt, um die hinter dem Türinnenblech und der Türinnenverkleidung im Naßraum der Fahrzeugtür gelegenen Bauteile (insbesondere den Fensterheber) sichtbar zu machen.

Gemäß dem Ausführungsbeispiel aus Figur 2 ist in dem Innenblech der Türkarosserie 1 ein großflächiger Ausschnitt 100 vorgesehen, der teilweise durch eine Türinnenverkleidung 5c abgedeckt ist.

Auf der Naßraumseite der Aussparung 100 verläuft zwischen einer unteren Befestigungsstelle 45 und einer oberen Befestigungsstelle 44 der Türkarosserie 1 eine Führungsschiene 37a eines Fensterhebers 37, an der eine Grundplatte 38 zur Aufnahme des Fensterheberantriebs 40 angeformt ist. Der Fensterheberantrieb 40 treibt ein Antriebsseil 41 an, das über Seilumlenkrollen 42, 43 entlang der Führungsschiene 37a geführt wird und mit einem (in Figur 2 nicht dargestellten) entlang der Führungsschiene 37a verschieblichen Mitnehmer verbunden ist, mit dem die zu verstellende Fensterscheibe gekoppelt wird.

Anhand Figur 2 ist auch erkennbar, daß die Führungsschiene 37a in an sich bekannter Weise durch die Achsen der Seilumlenkrollen 42, 43 hindurch an der Türkarosserie 1 befestigt ist.

Erfindungsgemäß ist an der Führungsschiene 37a zum einen eine Befestigungsstelle 53 vorgesehen, über die ein Zuziehgriff 50 der Fahrzeugtür mit der Führungsschiene 37a verbunden ist. Der Zuziehgriff 50 ist außerdem über eine im Schachtbereich der Türkarosserie 1 vorgesehene Befestigungsstelle 52 unmittelbar mit der Türkarosserie 1 verbunden. Hierdurch wird eine stabile Befestigung des Zuziehgriffes 50 an der Fahrzeugtür erreicht, ohne daß hierfür spezielle zusätzliche Verstärkungsbereiche notwendig wären. Ferner trägt der Zuziehgriff 50 selber zur Stabilisierung der Türkarosserie 1 bei, da er sich nach Art einer Querstrebe über einen Teil der großflächigen Ausnehmung 100 in der Türkarosserie 1 erstreckt.

Darüber hinaus wird durch die Verbindung zwischen der Türinnenverkleidung 5c und der Führungsschiene 37a an einer Befestigungsstelle 6 eine Stabilisierung der Türinnenverkleidung 5c erreicht.

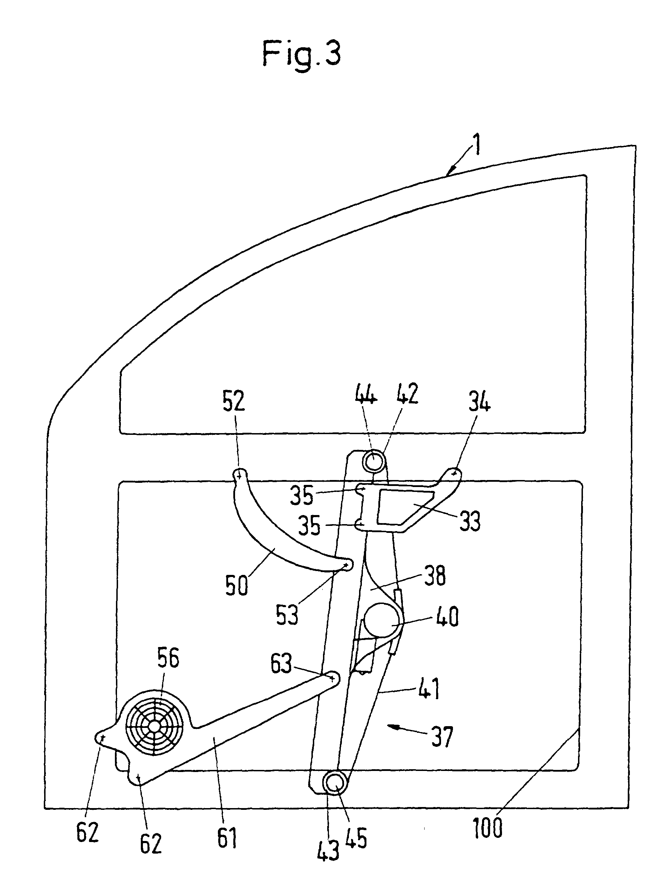

In Figur 3 ist eine Abwandlung der in Figur 2 gezeigten Fahrzeugtür dargestellt. Hierbei sind übereinstimmende Bauteile mit den gleichen Bezugszeichen wie in Figur 2 bezeichnet, so daß im folgenden nur auf die Unterschiede im Hinblick auf Figur 2 eingegangen wird.

Gemäß Figur 3 erstreckt sich ein vorzugsweise aus Metall oder einem faserverstärkten Kunststoff bestehendes Trägerelement 61, auf dem ein mit einer Abdeckung 56 versehener Lautsprecher angeordnet ist, von der Führungsschiene 37a bis zu einem Eckbereich der Türkarosserie 1. Dabei ist das Trägerelement über eine Befestigungsstelle 63 mit der Führungsschiene 37a und über zwei Befestigungsstellen 62 mit der Türkarosserie 1 verbunden. Da sich das Trägerelement teilweise über den Ausschnitt 100 in der Türkarosserie 1 erstreckt, trägt dieses zur Stabilisierung der Fahrzeugtür bei.

Gleiches gilt auch für das Türsteuergerät 33, das in einem wasserdichten und vorzugsweise aus faserverstärktem Kunststoff bestehenden Gehäuse angeordnet ist und sich im Naßraum der Fahrzeugtür über einen Teil des Ausschnitts 100 hinweg von der Führungsschiene 37a zu dem Schachtbereich der Türkarosserie 1 erstreckt. Hierbei ist das Türsteuergerät 33 über eine Befestigungsstelle 34 mit dem Schachtbereich der Türkarosserie 1 und über zwei Befestigungsstellen 35 mit der Führungsschiene 37a des Fensterhebers 37 verbunden.

Insgesamt wird durch die oben beschriebene Verbindung des Türsteuergerätes 33, des Zuziehgriffes 50 und des mit einem Lautsprecher versehenen Trägerelements 61 mit der Führungsschiene 37a einerseits und der Türkarosserie 1 andererseits eine dreifache zusätzliche Versteifung der Fahrzeugtür im Bereich der Aussparung 100 erreicht.

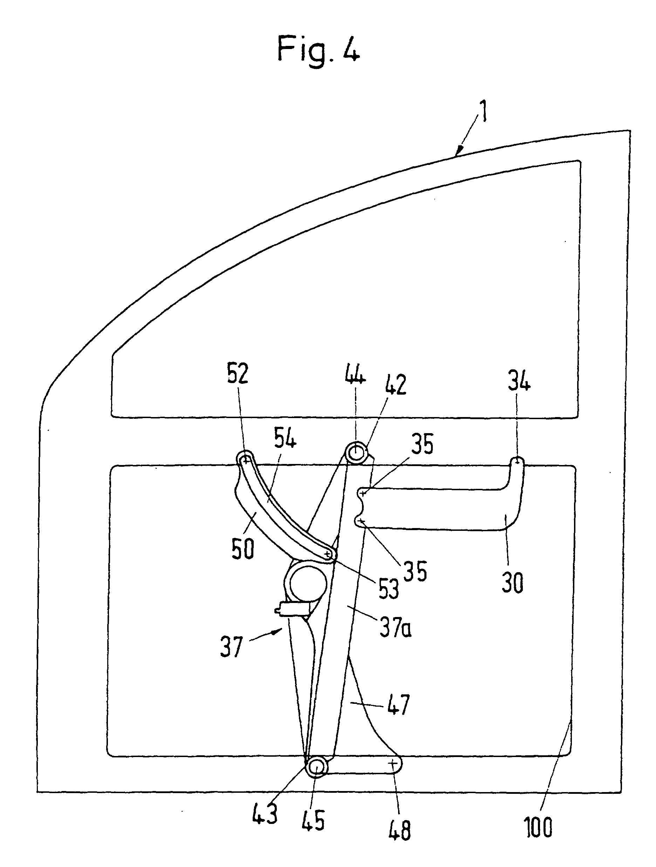

Bei dem in Figur 4 gezeigten Ausführungsbeispiel der Erfindung ist der sich von der Führungsschiene 37a zu dem Türschacht erstreckende Zuziehgriff 50 zusätzlich mit einem mechanischem Versteifungselement 54 versehen, bei dem es sich beispielsweise um eine umspritzte Metallschiene handeln kann.

Ferner erstreckt sich von der Führungsschiene 37a zu dem Schachtbereich der Türkarosserie 1 das Gehäuse einer Airbageinheit, das über zwei Befestigungsstellen 35 mit der Führungsschiene 37a und über eine Befestigungsstelle 34 mit dem Schachtbereich der Türkarosserie 1 verbunden ist.

Die Führungsschiene 37a weist in ihrem unteren Abschnitt eine sich im wesentlichen in der Türebene erstreckende Verbreiterung 47 auf, die über eine Befestigungsstelle 48 zusätzlich mit der Türkarosserie 1 verbunden ist. Hierdurch wird im unteren Bereich der Fahrzeugtür eine zusätzliche Versteifung der Karosserie im Bereich des Ausschnitts 100 erreicht.

Im oberen Bereich des Ausschnitts 100 wird diese Versteifung durch den Zuziehgriff 50 einerseits und den Seitenairbag 30 andererseits gewähleistet, die sich jeweils über einen Teil des Ausschnitts 100 erstrecken und dadurch als Querstreben wirken.

Der Zuziehgriff 50, die Führungsschiene 37a und der verbreiterte Bereich 47 bilden einen Zugverbund, der sich quer über den gesamten Ausschnitt 100 erstreckt. Hierdurch wird eine besondere Erhöhung der Stabilität der Karosserie erreicht, die insbesondere im Hinblick auf einen Crash-Fall von Bedeutung ist.

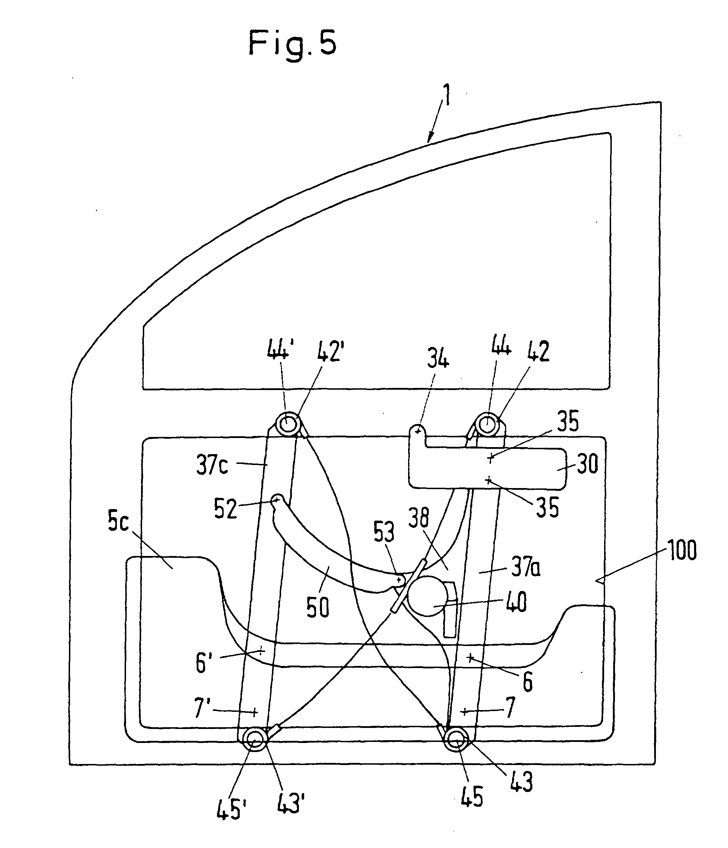

In Figur 5 ist eine Variante einer Türkarosserie 1 schematisch dargestellt, in der ein doppelsträngiger Seilfensterheber 37 angeordnet ist. Dieser umfaßt zwei parallel zueinander verlaufende Führungsschienen 37a, 37c, die an ihren Enden jeweils Seilumlenkrollen 42, 43 bzw. 42', 43' aufweisen, durch deren Achsen 44, 45 bzw. 44', 45' hindurch die Führungsschienen 37a, 37c an ihren beiden Enden mit der Türkarosserie 1 verbunden sind.

Jede der beiden Führungsschienen 37a, 37b weist außerdem zwei Befestigungsstellen 6, 7 bzw. 6', 7' in ihrem unteren Bereich auf, über die die Führungsschienen 37a, 37c mit einer Türinnenverkleidung 5c verbunden sind. Die Führungsschienen 37a, 37c können daher mit der Türinnenverkleidung 5c zu einer vormontierten Einheit zusammengefaßt werden, die fertig montiert in die Karosserie 1 einer Fahrzeugtür eingebaut werden kann.

Diese vormontierbare Baueinheit wird durch einen Zuziehgriff 50 versteift, der sich von einer Trägerplatte 38 der einen Führungsschiene 37a zu der zweiten Führungsschiene 37c erstreckt und über Befestigungsstellen 53 bzw. 52 mit den beiden Führungsschienen 37a, 37c verbunden ist. Die vormontierbare Einheit kann zudem noch alle weiteren Funktionseinheiten des doppelsträngigen Fensterhebers 37, wie insbesondere den Antrieb 40 und das Antriebsseil 41 umfassen.

Im oberen Bereich der einen Führungsschiene 37a erfolgt eine zusätzliche Versteifung über eine Airbageinheit 30, die sich von dem Türschacht der Türkarosserie 1 zu dem oberen Ende der Führungsschiene 37a erstreckt.

Dadurch daß die Türinnenverkleidung 5c über insgesamt vier Befestigungsstellen 6, 6', 7, 7' mit den Führungsschienen 37a, 37c verbunden ist, ist eine zusätzliche unmittelbare Befestigung der Türinnenverkleidung an der Türkarosserie 1 selbst nicht erforderlich. Die vormontierbare Einheit, die aus der Türinnenverkleidung 5c und dem Fensterheber 37 besteht, kann daher in einfacher Weise dadurch an der Türkarosserie 1 befestigt werden, daß die Führungsschienen 37a, 37c des Fensterhebers 37 an den hierfür vorgesehenen Befestigungsstellen 44, 44', 45, 45' mit der Türkarosserie verbunden werden. Weitere Montageschritte sind nicht erforderlich.

## Patentansprüche

1. Kraftfahrzeugtür mit einer Türkarosserie (1), einer Türinnenverkleidung (5a - 5c) und einem in der Türkarosserie (1) angeordneten Seil-Fensterheber (37), der eine Führungsschiene (37a, 37c) und ein an der Führungsschiene (37a, 37c) geführtes Antriebsseil (41) umfaßt, wobei auf der Führungsschiene (37a, 37c) ein Mitnehmer für eine Fensterscheibe verschieblich angeordnet werden kann und wobei die Führungsschiene (37a, 37c) an mindestens zwei in Schienenlängsrichtung voneinander beabstandeten Stellen (44, 45; 44', 45') mit der Türkarosserie (1) verbunden ist,
**dadurch gekennzeichnet,**
**daß** mindestens ein zusätzliches, nicht zum Verstellgetriebe des Fensterhebers (37) gehörendes Funktionselement (30, 33, 50, 56) einerseits zwischen den Verbindungsstellen (44, 45; 44', 45') der Führungsschiene (37a, 37c) an der Türkarosserie mit der Führungsschiene (37a, 37c) und andererseits mit der Türkarosserie (1) verbunden ist.

2. Kraftfahrzeugtür nach Anspruch 1, **dadurch gekennzeichnet, daß** das Funktionselement (50, 56) mit der Führungsschiene (37a) und/oder mit der Türkarosserie (1) über mindestens ein weiteres Bauelement (37c; 61) verbunden ist.

3. Kraftfahrzeugtür nach Anspruch 1 oder 2, **dadurch gekennzeichnet, daß** sich das Funktionselement (30, 33, 50, 56) zumindest teilweise über einen großflächigen Ausschnitt (100, 101) in der Türkarosserie (1) erstreckt.

4. Kraftfahrzeugtür nach einem der vorhergehenden Ansprüche, **dadurch gekennzeichnet, daß** durch die Anordung des Funktionselements (30, 33, 50, 56) in der Türkarosserie (1) eine Versteifung der Türkarosserie (1) erreicht wird, wobei das Funktionselement (30, 33, 50, 56) an sich nicht primär als Versteifungselement vorgesehen ist.

5. Kraftfahrzeugtür nach einem der vorhergehenden Ansprüche, **dadurch gekennzeichnet, daß** das Funktionselement (30, 33, 50, 56) mit der Türkarosserie (1) über eine weitere Führungsschiene (37c) verbunden ist.

6. Kraftfahrzeugtür nach einem der vorhergehenden Ansprüche, **dadurch gekennzeichnet, daß** die Führungsschiene (37a, 37c) an ihren Enden Umlenkelemente (42, 43; 42', 43') für ein entlang der Führungsschiene (37a, 37c) verlaufendes Zugmittel (41) aufweist und daß die Führungsschiene (37a, 37c) durch die Achsen der Umlenkelemente (42, 43; 42', 43') hindurch mit der Türkarosserie (1) verbunden ist.

7. Kraftfahrzeugtür nach einem der Ansprüche 2 bis 6, **dadurch gekennzeichnet, daß** das Funktionselement (56) auf einem Trägerelement (61) angeordnet ist, über das es mit der Führungsschiene (37a) und/oder der Türkarosserie (1) verbunden ist.

8. Kraftfahrzeugtür nach Anspruch 7, **dadurch gekennzeichnet, daß** das Trägerelement (61) sowohl mit der Führungsschiene (37a) als auch mit der Türkarosserie (1) verbunden ist.

9. Kraftfahrzeugtür nach einem der vorhergehenden Ansprüche, **dadurch gekennzeichnet, daß** das Funktionselement (50) als Türgriff ausgebildet ist.

10. Kraftfahrzeugtür nach einem der vorhergehenden Ansprüche, **dadurch gekennzeichnet, daß** das Funktionselement (33, 56) als elektronische Steuereinheit oder als Lautsprecher ausgebildet ist.

11. Kraftfahrzeugtür nach einem der vorhergehenden Ansprüche, **dadurch gekennzeichnet, daß** das Funktionselement (30) als Seitenairbag ausgebildet ist.

12. Kraftfahrzeugtür nach einem der vorhergehenden Ansprüche, **dadurch gekennzeichnet, daß** an der Führungsschiene (37a) eine Grundplatte (38) zur Aufnahme der Antriebsvorrichtung (40) des Fensterhebers (37) angeformt ist und daß an der Grundplatte (38) mindestens eine Befestigungsstelle (53) für das Funktionselement (50) vorgesehen ist.

13. Kraftfahrzeugtür nach einem der vorhergehenden Ansprüche, **dadurch gekennzeichnet, daß** die Führungsschiene (37a) an mindestens einem ihrer Endbereiche eine sich im wesentlichen entlang der Türebene erstreckende Verbreiterung (47) aufweist, die über mindestens eine Befestigungsstelle (48), vorzugsweise zwei Befestigungsstellen mit der Türkarosserie (1) verbunden ist.

14. Kraftfahrzeugtür nach einem der Ansprüche 2 bis 13, **dadurch gekennzeichnet, daß** der Fensterheber (37) zwei Führungsschienen (37a, 37c) umfaßt und das Funktionselement (50) mit beiden Führungsschienen (37a, 37c) verbunden ist.

15. Kraftfahrzeugtür nach einem der vorhergehenden Ansprüche, **dadurch gekennzeichnet, daß** zumindest ein Teil der Türinnenverkleidung (5c) mit der Führungsschiene (37a, 37c) verbunden ist.

16. Kraftfahrzeugtür nach Anspruch 15, **dadurch gekennzeichnet, daß** zumindest ein Teil der Türinnenverkleidung (5c) vormontierbar an der Führungsschiene (37a, 37c) befestigt ist.

17. Kraftfahrzeugtür nach Anspruch 15 oder 16, **dadurch gekennzeichnet, daß** die Türinnenverkleidung (5c) ausschließlich an der Führungsschiene (37a, 37c) befestigt ist.

## Claims

1. Motor vehicle door with a door body (1), a door inside trim (5a-5c) and a cable window lifter (37) mounted in the door body (1) and comprising a guide rail (37a, 37c) and a drive cable (41) guided on the guide rail (37a, 37c) wherein a follower for a window pane can be mounted displaceable on the guide rail (37a, 37c) and wherein the guide rail (37a, 37c) is connected to the door body (1) in at least two places (44, 45; 44', 45') spaced from each other in the longitudinal direction of the rail,
**characterised in that**
at least one additional function element (30, 33, 50, 56) not belonging to the adjusting drive of the window lifter (37) is connected on one side to the guide rail (37a, 37c) between the connecting points (44, 45; 44', 45') of the guide rail (37a, 37c) on the door body and on the other side to the door body (1).

2. Motor vehicle door according to claim 1, **characterised in that** the function element (50, 56) is connected to the guide rail (37a) and/or to the door body (1) through at least one further structural element (37c; 61).

3. Motor vehicle door according to claim 1 or 2, **characterised in that** the function element (30, 33, 50, 56) extends at least in part over a large surface area cut-out section (100, 101) in the door body (1).

4. Motor vehicle door according to one of the preceding claims, **characterised in that** the arrangement of the function element (30, 33, 50, 56) in the door body (1) provides a reinforcement for the door body (1) whereby the function element (30, 33, 50, 56) is not primarily provided as a reinforcement element.

5. Motor vehicle door according to one of the preceding claims **characterised in that** the function element (30, 33, 50, 56) is connected to the door body (1) through a further guide rail (37c).

6. Motor vehicle door according to one of the preceding claims **characterised in that** the guide rail (37a, 37c) has at its ends guide elements (42, 43; 42', 43') for a draw member (41) running along the guide rail (37a, 37c) and that the guide rail (37a, 37c) is connected through the axles of the guide elements (42, 43; 42', 43') to the door body (1).

7. Motor vehicle door according to one of claims 2 to 6 **characterised in that** the function element (56) is mounted on a support element (61) through which it is connected to the guide rail (37a) and/or the door body (1).

8. Motor vehicle door according to claim 7 **characterised in that** the support element (61) is connected both to the guide rail (37a) and to the door body (1).

9. Motor vehicle door according to one of the preceding claims **characterised in that** the function element (50) is designed as a door handle.

10. Motor vehicle door according to one of the preceding claims **characterised in that** the function element (33, 56) is formed as an electronic control unit or as a speaker.

11. Motor vehicle door according to one of the preceding claims **characterised in that** the function element (30) is designed as a side air bag.

12. Motor vehicle door according to one of the preceding claims **characterised in that** a base plate (38) is formed on the guide rail (37a) for holding the drive device (40) of the window lifter (37) and that at least one fixing point (53) for the function element (50) is provided on the base plate (38).

13. Motor vehicle door according to one of the preceding claims **characterised in that** the guide rail (37a) has on at least one of its end regions a widened area (47) extending substantially along the door plane and connected to the door body (1) through at least one fixing spot (48), preferably two fixing spots.

14. Motor vehicle door according to one of claims 2 to 13 **characterised in that** the window lifter (37) comprises two guide rails (37a, 37c) and the function element (50) is connected to both guide rails (37a, 37c).

15. Motor vehicle door according to one of the preceding claims **characterised in that** at least one part of the door inside trim (5c) is connected to the guide rail (37a, 37c).

16. Motor vehicle door according to claim 15 **characterised in that** at least one part of the door inside trim (5c) is fixed pre-mountable on the guide rail (37a, 37c).

17. Motor vehicle door according to claim 15 or 16 **characterised in that** the door inside trim (5c) is fixed solely on the guide rail (37a, 37c).

## Revendications

1. Portière de véhicule automobile comportant une carrosserie de portière (1), un habillage intérieur de portière (5a-5c) et un lève-vitre à câble (37), qui est disposé dans la carrosserie de portière (1) et qui comprend un rail de guidage (37a, 37c) et un câble d'entraînement (41), qui est guidé sur le rail de guidage (37a, 37c), dans lequel un organe d'entraînement pour une vitre de fenêtre peut être disposé de façon déplaçable sur le rail de guidage (37a, 37c), et dans lequel le rail de guidage (37a, 37c) est relié à la carrosserie de portière (1) en au moins deux emplacements (44, 45; 44', 45') distants l'un de l'autre dans la direction longitudinale du rail,
**caractérisée en ce**
**qu'**au moins un élément de fonctionnement supplémentaire (30, 33, 50, 56), qui ne fait pas partie du mécanisme de réglage du lève-vitre (37), est relié d'une part entre les emplacements de liaison (44, 45; 44', 45') du rail de guidage (37a, 37c) sur la carrosserie de portière avec le rail de guidage (37a, 37c) et d'autre part avec la carrosserie de portière (1).

2. Portière de véhicule automobile selon la revendication 1, **caractérisée en ce que** l'élément de fonctionnement (50, 56) est relié au rail de guidage (37a) et/ou à la carrosserie de portière (1) par l'intermédiaire d'au moins un autre composant (37c; 61).

3. Portière de véhicule automobile selon la revendication 1 ou 2, **caractérisée en ce que** l'élément de fonctionnement (30, 33, 50, 56) s'étend au moins en partie sur une section de grande surface (100, 101) de la carrosserie de portière (1).

4. Portière de véhicule automobile selon l'une des revendications précédentes, **caractérisée en ce qu'**un renforcement de la carrosserie de portière (1) est obtenu par la disposition de l'élément de fonctionnement (30, 33, 50, 56) dans la carrosserie de portière (1), l'élément de fonctionnement (30, 33, 50, 56) étant prévu en soi non principalement en tant qu'élément de renfort.

5. Portière de véhicule automobile selon l'une des revendications précédentes, **caractérisée en ce que** l'élément de fonctionnement (30, 33, 50, 56) est relié à la carrosserie de portière (1) au moyen d'un autre rail de guidage (37c).

6. Portière de véhicule automobile selon l'une des revendications précédentes, **caractérisée en ce que** le rail de guidage (37a, 37c) comporte, à ses extrémités, les éléments de renvoi (42, 43; 42', 43') pour un moyen de traction (41) qui s'étend le long du rail de guidage (37a, 37c), et **en ce que** le rail de guidage (37a, 37c) est relié à la carrosserie de portière (1) au moyen des axes des éléments de renvoi (42, 43; 42', 43').

7. Portière de véhicule automobile selon l'une des revendications 2 à 6, **caractérisée en ce que** l'élément de fonction (56) est disposé sur un élément de support (61), au moyen duquel il est relié au rail de guidage (37a) et/ou à la carrosserie de portière (1).

8. Portière de véhicule automobile selon la revendication 7, **caractérisée en ce que** l'élément de support (61) est relié aussi bien au rail de guidage (37a) qu'à la carrosserie de portière (1).

9. Portière de véhicule automobile selon l'une des revendications précédentes, **caractérisée en ce que** l'élément de fonctionnement (50) est agencé sous la forme d'une poignée de portière.

10. Portière de véhicule automobile selon l'une des revendications précédentes, **caractérisée en ce que** l'élément de fonctionnement (33, 56) est agencé sous la forme d'une unité de commande électronique ou sous la forme d'un haut-parleur.

11. Portière de véhicule automobile selon l'une des revendications précédentes, **caractérisée en ce que** l'élément de fonctionnement (30) est agencé sous la forme d'un airbag latéral.

12. Portière de véhicule automobile selon l'une des revendications précédentes, **caractérisée en ce qu'**une plaque de base (38) est formée sur le rail de guidage (37a) pour recevoir le dispositif d'entraînement (40) du lève-vitre (37), et **en ce que** l'emplacement de fixation (53) pour l'élément de fonctionnement (50) est prévu sur la plaque de base (38).

13. Portière de véhicule automobile selon l'une des revendications précédentes, **caractérisée en ce que** le rail de guidage (37a) comporte, sur au moins l'une de ses parties d'extrémité, un élargissement (47), qui s'étend essentiellement le long de la portière et est relié à la carrosserie de portière (1) par l'intermédiaire d'au moins un emplacement de fixation (48), de préférence avec au moins deux emplacements de fixation.

14. Portière de véhicule automobile selon l'une des revendications 2 à 13, **caractérisée en ce que** le lève-vitre (37) comprend deux rails de guidage (37a, 37c) et **en ce que** l'élément de fonctionnement (50) est relié aux deux rails de guidage (37a, 37c).

15. Portière de véhicule automobile selon l'une des revendications précédentes, **caractérisée en ce qu'**au moins une partie de l'habillage intérieur de portière (5c) est reliée au rail de guidage (37a, 37c).

16. Portière de véhicule automobile selon la revendication 15, **caractérisée en ce qu'**au moins une partie de l'habillage intérieur de portière (5a) est fixée de manière à pouvoir être préassemblée au rail de guidage (37a, 37c).

17. Portière de véhicule automobile selon la revendication 15 ou 16, **caractérisée en ce que** l'habillage intérieur de portière (5c) est fixé exclusivement sur le rail de guidage (37a, 37c).
